(19) Europäisches Patentamt
European Patent Office
Office européen des brevets

(11) Publication number: 0 224 191 A2

# (12) EUROPEAN PATENT APPLICATION

(21) Application number: 86116029.9

(22) Date of filing: 19.11.86

(51) Int. Cl.⁴: G11B 7/24 , G11B 7/26

(30) Priority: 25.11.85 US 802030

(43) Date of publication of application: 03.06.87 Bulletin 87/23

(84) Designated Contracting States: DE FR GB IT NL

(71) Applicant: E.I. DU PONT DE NEMOURS AND COMPANY
1007 Market Street
Wilmington Delaware 19898(US)

(72) Inventor: Lewin, Laura Ann
7 Stage Road
Newark Delaware 19711(US)
Inventor: Lee, Ying Kao
16 North Woodleigh Drive
Cherry Hill New Jersey 08003(US)
Inventor: Craig, John Dantzenbaker
17 Rawlings Drive
Bear Delaware 19701(US)

(74) Representative: von Kreisler, Alek, Dipl.-Chem. et al
Deichmannhaus am Hauptbahnhof
D-5000 Köln 1(DE)

## (54) Method for forming optically smooth polymeric layers.

(57) A method for forming an optically smooth layer on a substrate comprising the sequential steps of:

a. applying to the substrate a layer of a flowable Newtonian liquid composition comprising (1) a film-forming polymer, and (2) a mutually soluble thermally activatable liquid cross-linking agent, both dissolved in (3) a volatile organic solvent;

b. raising the temperature of the flowable liquid layer to a temperature below the activation temperature of the cross-linking agent by which the thickness of the layer is reduced but the layer remains flowable at the raised temperature.

c. raising the temperature of the flowable layer to a level above the activation temperature to initiate cross-linking and to effect removal of solvent by evaporation and to induce polymer flow; and

d. heating the solvent-free flowed polymer solution layer to effect cross-linking of the polymer solution to an extent that the solution of polymers becomes thermoset.

EP 0 224 191 A2

# METHOD FOR FORMING OPTICALLY SMOOTH POLYMERIC LAYERS

## Field of Invention

The invention relates to a method for forming optically smooth polymeric layers, particularly for use in the manufacture of optical recording media.

## Background of the Invention

In response to the demand for more reliable and higher capacity data storage and retrieval systems, there is considerable activity in the research and development of so-called optical disk recording systems. These systems utilize a highly focused modulated beam of light, such as a laser beam, which is directed onto a recording layer which is capable of absorbing a substantial amount of the light. The heat thusly produced causes the light-absorbing material in the areas struck by the highly focused laser beam to change chemically and/or physically, thus producing a concomitant change in optical properties, e.g., transmissivity or reflectivity, in the affected area. For readout, the contrast between the amount of light transmitted or reflected from the unaffected parts of the absorbing layer and from the marked areas of the layer is measured. Examples of such recording systems are disclosed in U.S. Patents throughout the literature and in numerous U.S. Patents such as U.S. 3,314,073 and 3,474,457. In recording data, a rotating disk having a light-absorptive recording layer is exposed to modulated radiation from a laser source. This radiation is passed through a modulator and appropriate optics, and the highly focused laser beam is directed onto the disk which forms by chemical and/or physical reaction of the light-absorbing layer a series of very small marks along a circular path within the light-absorptive layer. The frequency of the marks is determined by the modulator inputs. Using laser beams with a focused spot diameter of 1 $\mu$m or less, data can be stored at a density of $10^8$ bits/cm$^2$ or higher.

The simplest optical disk medium consists merely of a dimensionally stable solid substrate on which is coated a thin layer of light-absorptive material such as a metal layer. When the light-absorptive layer is struck by an intense beam of coherent light, such as from a laser source, the light-absorptive material is either vaporized and/or thermally degraded, thereby producing a very small marked area which exhibits different transmissivity or reflectivity than the adjacent unmarked layer. Multilayer antireflection structures, such as those disclosed in U.S. 4,305,081 to Spong and U.S. 4,270,132 to Bell, increase the absorption of the laser bean which also give better read/write contrast than with the use of simple single layer media. Therefore, for purposes of obtaining better power efficiency, sensitivity and permanency of the record, it has been preferred to use mutilayer antireflective structures.

There are two basic types of multilayer antireflective structures, one of which is basically a bilayer structure and the other a trilayer structure. In bilayer media, the substrate is coated with a very smooth, highly reflective material such as aluminum, on top of which is coated a layer of moderately light-absorptive material which is preferably of a thickness corresponding to about $\lambda/4n$, where $\lambda$ is the wavelength of the recording light source and n is the refractive index of the light-absorptive layer. In trilayer media, the substrate is likewise coated with a first layer of very smooth highly reflective material on which is coated a second layer of transparent material. Atop the transparent second layer is coated a thin third layer of strongly light-absorptive material. The combined thickness of the transparent and absorptive layers is preferably adjusted to be about $\lambda/4n$. In both types of structures, the adjustment of certain layer thicknesses according to the wavelength of light and refractive index of the layer is for the purpose of minimizing the amount of light reflected from the unmarked areas and maximizing the amount of light reflected from the marked areas, thus producing a higher playback signal amplitude. A detailed discussion of the three types of disk construction is given by A. E. Bell in Computer Design, Jan. 1983. pp. 133-146 and the references cited therein. See especially Bell and Spong. IEEE Journal of Quantum Electronics, Vol. QE-14, 1978, pp. 487-495.

It will be realized, of course, that the terms "bilayer" and "trilayer" refer only to the fundamental optical layers and do not exclude the use of ancillary layers. In particular, it is essential in most instances to interpose between the substrate and the reflective layer a polymeric layer which serves two important functions: (1) the layer must be optically smooth in order to provide an optically suitable foundation for the

overlying reflective layer; and (2) the layer must have good adhesion to the underlying substrate as well as the overlying reflective layer. Furthermore, these properties must persist under all the environmental conditions which may exist as the medium is used and stored.

## Brief Description of the Invention

The invention is therefore directed to a method for forming an optically smooth layer on a substrate having micro-irregularities, comprising the sequential steps of:

a. applying to the substrate a layer of a flowable Newtonian liquid composition comprising (1) a film-forming thermoplastic or self-condensation polymer, and (2) a mutually soluble thermally activatable liquid cross-linking agent, both dissolved in (3) a volatile organic solvent below the activation temperature of the cross-linking agent;

b. raising the temperature of the flowable liquid layer to a temperature below the activation temperature of the cross-linking agent by which the thickness of the layer is reduced but the layer remains flowable at the raised temperature.

c. raising the temperature of the flowable layer further to a level above the activation temperature to initiate cross-linking and to effect removal of solvent by evaporation and to induce polymer flow.

d. heating the solvent-free flowed polymer solution layer to effect cross-linking of the polymer solution to an extent that the solution of polymers becomes thermoset.

## Detailed Description of the Invention

### A. Substrate

The substrate materials which can be used in the invention are those which are dimensionally stable within the assembled structure. The substrate can be either opaque or transparent and can be made of virtually any of the conventional substrate materials such as aluminum, glass, quartz, copper, brass, steel, magnesium, cadmium, silver, gold, polyester film, poly(tetrafluoroethylene) film, polyamide films and other plastic or composite materials. In all cases it will be recognized that chemical inertness as well as dimensional stability over a prolonged period of time are essential properties of whatever substrate material is chosen.

### B. Film-forming Polymer

The film-forming polymer on a solvent-free basis can be either a viscous liquid or a solid at the application temperature so long as it is thermoplastic or self-condensing and is capable of forming a coherent film by conventional coating methods. However because of its intended use as an intermediate layer for optical recording media, it is essential that the polymer when thermoset also have quite excellent adhesion to all of the wide variety of organic and inorganic substrate materials with which it may be used. Suitable polymers meeting these criteria are linear saturated polyesters, carboxylated butadiene-styrene and butadiene-acrylonitrile copolymers, copolymers of alkyl methacrylates, acrylonitrile and glycidyl methacrylate, poly(vinyl pyrrolidone), poly(vinyl acetate), ethylene-vinyl acetate copolymers, vinyl pyrrolidone-vinyl acetate copolymers and the like. Preferred polymers are polyvinyl acetals, such as polyvinyl butyrals and polyvinyl formals and polyimides and polyamic acid precursors of polyimides.

Polyvinyl acetals are prepared from aldehydes and polyvinyl alcohols. By the use of polyvinyl alcohols having different degrees of hydrolysis, polyvinyl acetals can be produced having predetermined proportions of hydroxy, acetate and acetal groups distributed randomly along the polymer backbone. Polyvinyl acetal resins are normally thermoplastic and are soluble in a wide variety of solvents. However, the solubility of polyvinyl acetals in particular solvents varies widely. For example, both polyvinyl butyrals and polyvinyl formals are soluble and N,N'-dimethyl-formamide and N-methyl-2-pyrrolidone, but only the polyvinyl butyrals are soluble in ethanol and 1-butanol. Polyvinyl acetal resins are available having average molecular weights of 10,000 to 270,000. Preferred resins are polyvinyl butyrals having molecular weights of 30,000 to 150,000 and polyvinyl formals having molecular weights of 10,000 to 40,000.

Polyimides are made by the condensation polymerization of dianhydrides and diamines to form polyamic acid. Such polyimide precursors are disclosed inter alia in U.S. 3,179,634 to Edwards. These polyamic acids are self-condensing and therefore readily dehydrated to the corresponding polyimides by heating at high temperatures, e.g., 300 to 400°C. The polyimides are not completely soluble and, therefore, films cannot be coated directly in the polyimide form. Instead, it is customary practice to use the precursor polyamic acids which have the advantage of being readily soluble in aprotic solvents. Such polyamic acid solutions are then coated to form the appropriate film and converted to the corresponding polyimide by heating the film at a high temperature to effect volatilization of the solvent and dehydration of the polyamic acid to form the polyimide. Even though polyimides themselves have generally not been soluble in aprotic solvents, more recently Fryd et al. in U.S. Patent Application S.N. 607,290, filed May 4, 1984, disclose the development of soluble polyimides. They are made by the use of aromatic diamines and dianhydrides which are selected with particular attention to ring conjugation and to the absence of certain aliphatic bonds and electron withdrawing groups. These too can be used in the invention.

Polyesters which have been found to be useful in the invention are Du Pont polyester resins 46960 and 46970 and Bostik® 7614 and 7651 polyester resins.

C. Cross-linking Agent

A wide variety of liquid cross-linking resins can be used as the cross-linking agent for the method of the invention including thermosetting resins such as aminoplast resins, phenolic resins, blocked polyisocyanates, masked isocyanates, and epoxy resins.

The aminoplast resins used may be alkylated methylol melamine resins, alkylated methylol urea, and similar compounds. Products obtained from the reaction of alcohols and formaldehyde with melamine, urea or benzoguanamine are most common and are preferred herein. However, condensation products of other amines and amides can also be employed, for example, aldehyde condensates of triazines, diazines, triazoles, guanadines, guanamines and alkyl-and aryl-substituted derivatives of such compounds, including alkyl-and aryl-substituted ureas and alkyl-and aryl-substituted melamines. Some examples of such compound are N,N'-dimethyl urea, benzourea, dicyandimide, formaguanamine, acetoguanomine, ammeline, 2-chloro-4,6-diamino-1,3,5-triazine, 6-methyl-2,4-diamino-1,3,5-triazine, 3,5-diaminotriazole, triaminopyrimidine, 2=mercapto-4,6-diaminopyrimidine, 3,4,6-tris(ethylamino)-1,3,5-triazine, and the like.

While the aldehyde employed is most often formaldehyde, other similar condensation products can be made from other aldehydes, such as acetaldehyde, crotonaldehyde, acrolein, benzaldehyde, furfural, glycols and the like.

The aminoplast resins contain methylol or similar alkylol groups, and in most instances at least a portion of these alkylol groups are etherified by a reaction with an alcohol to provide organic solvent-soluble resins. Any monohydric alcohol can be employed for this purpose, including such alcohols as methanol, ethanol, propanol, butanol, pentanol, hexanol, heptanol and others, as well as benzyl alcohol and other aromatic alcohols, cyclic alcohol such as cyclohexanol, monoethers of glycols such as Cellosolves and Carbitols, and halogen-substituted or other substituted alcohols, such as 3-chloropropanol and butoxyethanol. The preferred aminoplast resins are substantially etherified with methanol or butanol.

The phenolic resins which may be used as curing agents herein are formed by the condensation of an aldehyde and a phenol. The most used aldehyde is formaldehyde, although other aldehydes, such as acetaldehyde, can also be employed. Methylene-releasing and aldehyde-releasing agents, such as paraformaldehyde and hexamethylene tetramine, can be utilized as the aldehyde agent if desired. Various phenols can be used; for instance, the phenol employed can be phenol itself, a cresol, or a substituted phenol in which a hydrocarbon radical having either a straight chain, a branched chain or a cyclic structure is substituted for a hydrogen in the aromatic ring. Mixtures of phenols are also often employed. Some specific examples of phenols utilized to produce these resins include p-phenyl-phenol, p-tert-butylphenol, p-tert-amylphenol, cyclopentyl-phenol and unsaturated hydrocarbon-substituted phenols, such as the monobutenyl phenols containing a butenyl group in ortho, meta or para position, and where the double bond occurs in various positions in the hydrocarbon chain. A common phenolic resin is phenol formaldehyde.

Particularly preferred types of phenolic resins are the alkyl ethers of mono-, di-and tri-methylol phenols. Various forms of these resins are described in U.S. Patents 2,579,329, 2,579,330, 2,579,331, 2,598,406, 2,606,929, 2,606,935 and 2,825,712. Such materials are sold under the trademark Methylon® resins by General Electric Co., Schenectady, NY.

Blocked organic polyisocyanate may be used as the curing agent herein. The conventional organic polyisocyanates, as described above, which are blocked with a volatile alcohol, ε-caprolactam, ketoximes or the like, so that they will be unblocked at temperatures above 100°C may be used. These curing agents are well-known in the art.

A masked polyisocyanate may also be used as the curing agent. These masked polyisocyanates, as is known in the art, are not derived from isocyanates, but do produce isocyanate groups upon heating at elevated temperatures. Examples of useful masked polyisocyanates include diaminimides

[(e.g., 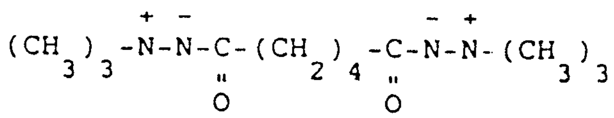 ],

adiponitrile dicarbonate, and the like.

An epoxy resin that can be used in the composition has the formula

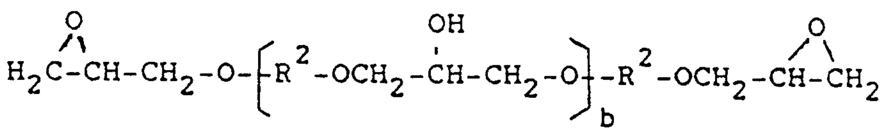

where b is a positive integer of about 1 to 4. Preferably, the epoxy resin is the reaction product of epichlorohydrin and bisphenol-A. In a preferred epoxy resin, $R^2$ in the above formula is

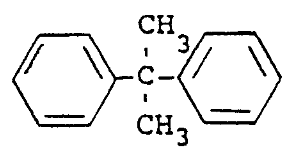

Typical of these preferred epoxy resins is "Epon" 828 having an equivalent weight of about 185-192 manufactured by Shell Chemical Company, Houston, TX and DER 331 having an equivalent weight of about 182-190 manufactured by The Dow Chemical Company, Midland, MI. The equivalent weight is the grams of resin that contain one gram equivalent of epoxide.

An epoxy novolac resin that can be used in the composition has the formula

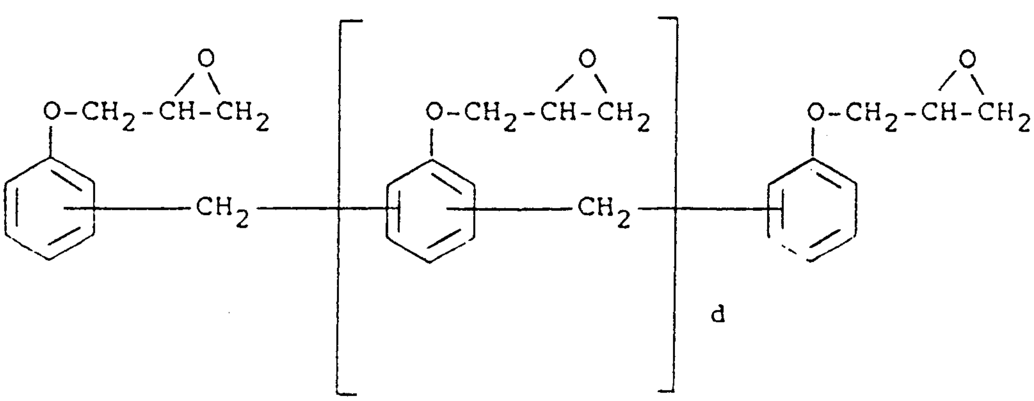

where d is a positive integer of about 1-2. Preferred epoxy novolac resins are DEN 431 where d has an average value of 0.2, DEN 438 where d has an average value of 1.6 and DEN 439 where d has an average value of 1.8. These resins are also manufactured by The Dow Chemical Company.

It will be recognized by those skilled in the polymerization art that thermally activatable cross-linking is a temperature-dependent phenomenon which takes place at an increasingly higher rate as temperature of the system is raised. In some polymerization systems, an insignificantly small amount of cross-linking may take place even at room temperature. As the temperature of the polymerization system is raised, the rate of

cross-linking becomes higher. The term "activation temperature", as used herein with respect to cross-linking agents, means the temperature at which the rate of cross-linking becomes sufficiently high to complete cross-linking of the system within 2-3 hours at that temperature. Within the context of the invention, the activation temperature of the various systems is quite dependent on both the composition and concentration of the individual cross-linking agents. Typically the activation temperature of the cross-linking agents as they are used in the invention are in the range of 150-200 C. However, in exceptional instances, they may be either lower or higher.

D. Solvent

From the above brief description of the invention, it is clear that both the film-forming polymers and the cross-linking agent must be soluble in the solvent component of the composition. Moreover, the solvent must be sufficiently volatile that by the time the coating is thermoset, only small amounts will remain in the coating.

Suitable solvents in which the film-forming resin and the cross-linking agent are mutually soluble are listed below.

| Film-forming Polymer | Cross-linking Agent | Solvent |
|---|---|---|
| Formvar® | Methylon® Resin 75108 | diacetone alcohol, cyclohexanone, N-methyl pyrrolidone |
| Butvar® | Methylon Resin 75108 | Dowanol® PM, 1-butanol |
| Pyralin®PI 2525 | Methylon Resin 75108 | diacetone alcohol, N-methyl pyrrolidone |
| Formvar | Epon® 1007F | toluene, ethanol |
| Formvar | Epon 1007F | Dowanol PM, 1-butanol |
| Pyralin | Methylon Resin 75108 | N-methyl pyrrolidone, cyclohexanone, 1-butanol |

Other solvents which may be selected are methyl benzoate, xylene, and Cellosolve® acetate.

In the examples, the coating solutions were prepared by dissolving the film-forming polymer and the cross-linking agent in the solvent and mixing them for a time sufficient to assure complete solution of those materials at the coating temperature.

E. Formulation

In formulating the compositions of the invention, neither the sequence of mixing the components nor the type of mixing are critical It is, however, essential that all of the components of the film-forming layer are mutually soluble and that upon removal of the solvent, the polymers are compatible with each other, though they do not have to form solid solutions.

It is, however, essential, that the film-forming composition be a Newtonian liquid at the temperature of application and that the layer remain flowable after application until most of the solvent is removed from the system and cross-linking has proceeded to a point just before the system becomes thermoset.

Test Procedures

Planarity: Planarity is determined by total integrated scatter (TIS) on a diamond turned aluminum disk by the method of Elson and Bennett. (See Elson, J.M. and Bennett, J.M., J. Opt. Soc., 1979, 69, 31-47 and Optical Engineering, 1978, 17 , 480-8. Planarity is measured in nanometers root means square (nm rms). A planarity of <9.8 nm rms is considered acceptable. Differential interference contrast microscopy at 300X was used to observe relative planarity among different samples. All of the microscopy and TIS information was obtained on the aluminized planarizing layer.

Smoothness: Profilometry measurements were also used to determine smoothness of planarized layers using a Dektak II profilometer equipped with a 12.5 $\mu$m stylus. Surface profile scans were run at a scan length of 1 mm and a cutoff length of 0.08 nm.

Adhesion: Adhesive is determined by ASTM D3359-78 with #670 3M Scotchguard® tape using 6 blades 1 mm apart. A desorbent of >3 is possible.

All of the microscopy and TIS information was carried out on the aluminized planarizing layer. The samples were sputter-coated with aluminum using a Perkin Elmer Model 2400 sputterer at 200 watts/120 min. with an operating pressure of $9 \times 10^{-3}$ torr and a base pressure of $7 \times 10^{-7}$ torr.

Example 1

Composition of polymer solution:
22.2 g Formvar 12/85
11.1 g GE Methylon Resin 75108
100 g Diacetone alcohol
50 g Cyclohexanone
50 g N-Methyl pyrrolidone

This material was 3 $\mu$ filtered and spin coated at room temperature at 600 rpm for 30 sec. onto a 14" diamond turned aluminum disk and baked first at 100°C for 20 min., and then at 200°C for 30 min. The coating was metallized with 1000Å sputtered aluminum, which passed the initial adhesion test. A 9.5±.3 nm rms roughness was obtained by total integrated scatter.

Example 2

Composition of polymer solution:
28 g Butvar B-74
282 g Dowanol PM
282 g 1-Butanol
8.4 g GE Methylon Resin 75108

The solution was spin coated at 600 rpm onto a 14" diamond turned aluminum substrate and baked at 100°C for 20 min., and then at 200°C for 30 min. The coating was metallized with 1000Å aluminum by sputtering. The metallized coating passed the adhesion test. A 9.6±.2 nm rms roughness was obtained by total integrated scatter.

Example 3

Composition of polymer solution:
100 g Pyralin PI 2525
36 g Diacetone alcohol
14 g N-Methyl pyrrolidone
7.5 g GE Methylon Resin 75108

The solution was spin coated at 600 rpm onto a 14" diamond turned aluminum substrate and baked at 100°C for 20 min., and then at 200°C for 30 min. The coating was aluminized by sputtering. It passed the adhesion test. By microscopy (differential interference contrast 300X) the coating is as planar as in Example 1.

Example 4

A solution of 12.8% Formvar 12/85 + 9.0% EPON 1007F in 60:40 toluene:ethanol was spin coated onto 3" diamond turned aluminum substrates at 2000 rpm. The coating was baked at 90°C for 30 min., and then at 200°C for 20 min. The coating was aluminized by sputtering (1000Å aluminum). It passed the adhesion test.

Example 5

A solution of 1 g Formvar 12/85, 9.5 g 1-butanol, 9.5 g Dowanol PM, and 0.2 g EPON 1007F was spin coated onto 3" diamond turned aluminum substrates at 2000 rpm. The coating was baked at 90°C for 30 min., and then at 200°C for 20 min., and aluminized by sputtering (1000Å aluminum). The aluminized coating passed the adhesion test.

Example 6

A solution containing 784.3 g of Pyralin PI 2525, 35.7 g of N-methyl pyrrolidone, 201.6 g cyclohexanone, 58.8 g 1-butanol, and 19.6 g GE Methylon Resin 75108 was 1.0 µ filtered and spin coated onto 14" aluminum disk at 600 rpm. The coating was baked at 100°C for 20 min., and then at 200°C for 30 min. and aluminized by sputtering (1000Å aluminum). By microscopy (differential interference contrast 300X) the coating was as planar as in Example 1.

Example 7

Composition of polymer solution:
100 g Pyralin PI 2525
7.5 g GE Methylon Resin 75108
26.1 g Cyclohexanone
7.9 g 1-Butanol
14.5 g N-Methyl pyrrolidone

This solution was spin coated at 600 rpm onto a 14" diamond turned aluminum substrate and baked at 100°C 20 min., and then at 200°C 30 min. By microscopy (differential interference contrast 300X), the coating met the planarizing criteria, i.e. had a planarity of less than 9.8 nm rms.

The uncoated aluminum substrate had a smoothness of 95±35Å to 130±35Å; and the coating had a smoothness of 42±17Å at 2 µm coating thickness and 27±10Å at 4 µm coating thickness. (All smoothness data are based on root mean square averages.)

Example 8

Composition of polymer solution:
633.6 g Methyl benzoate
70.4 g N-Methy pyrrolidone
96.0 g Formvar 5/95E
47.8 g GE Methylon Resin 75108
This material was .2 µ filtered and spincoated at 1000 RPM for 1 minute onto a 14" diamond turned aluminum disk, baked first at 100°C for 20 minutes, and then at 200°C for 30 minutes. The coating was metallized with 1000Å of aluminum by sputtering. It passed the adhesion test. Smoothness by profilometry for a 2 µ thick coating was measured to be 29±12Å. By microscopy, this layer was more planar than the layer in Example 1.

Glossary of Trademarks

1. Acrysol® is a trademark of Rohm & Haas Company, Philadelphia, PA for aqueous solutions of polymeric acrylic salts

2. Bostik® is a trademark of the Bostik Division of Emhart Chemical Group, Middleton, MA for solid polyester resins

3. Butvar® is a trademark of Monsanto Chemical Co., St. Louis, MO for polyvinylbutyral resins

4. Carboset® is a trademark of BF Goodrich Chemical Co., Cleveland, OH for acrylic copolymers

5. Carbitol® is a trademark of Union Carbide Corp., New York, NY for mono-and di-alkyl ethers of diethylene glycol and their derivatives

6. Cellosolve® acetate is a trademark of Union Carbide Corp., New York, NY for ethylene glycol monoethyl ether acetate

7. Dektak® is a trademark of Sloan Technology Corp., Santa Barbara, CA for profilometry measuring instruments.

8. Dowanol® is a trademark of Dow Chemical Co., Midland, MI for a series of solvents which are alkyl or aryl monoethers of ethylene and higher polyglycols

9. Epon® is a trademark of Shell Chemical Co., Houston, TX for epoxy resins which are epichlorodrin bisphenol-A condensation products

10. Formvar® is a trademark of Monsanto Chemical Co., St. Louis, MO for polyvinylformal resins

11. Methylon® is a trademark of General Electric Co., Schenectady, NY for aldehyde/trimethylol phenol condensation resins

12. Pyralin® is a trademark of E. I. du Pont de Nemours and Company, Inc., Wilmington, DE for polyimide coating solutions

13. Scotch® is a trademark of Minnesota Mining and Manufacturing Company, St. Paul, MN for adhesive tape.

14. 49000 is a tradename of E. I du Pont de Nemours and Company, Inc., Wilmington, DE for solid polyester resin adhesives

**Claims**

1. A method for forming an optically smooth layer on a substrate having micro-irregularities, comprising the sequential steps of:

a. applying to the substrate a layer of a flowable Newtonian liquid composition comprising (1) a film-forming thermoplastic or self-condensation polymer, and (2) a mutually soluble thermally activatable liquid cross-linking agent, both dissolved in (3) a volatile organic solvent below the activation temperature of the cross-linking agent;

b. raising the temperature of the flowable liquid layer to a temperature below the activation temperature of the cross-linking agent by which the thickness of the layer is reduced but the layer remains flowable at the raised temperature.

c further raising the temperature of the flowable layer to a level above the activation temperature to initiate cross-linking and to effect removal of solvent by evaporation and to induce polymer flow.

d. heating the solvent-free flowed polymer solution layer to effect cross-linking of the polymer solution to an extent that the solution of polymers becomes thermoset.

2. The method of claim 1 in which the film-forming polymer is selected from poly(vinyl acetal), polyimide, polyamic acid precursors of polyimides and mixtures thereof.

3. The method of claim 1 in which the film-forming polymer is poly(vinyl acetal).

4. The method of claim 1 in which the film-forming polymer is a polyamic acid solution.

5. The method of claim 1 in which the cross-linking agent is a liquid phenolic resin.

6. The method of claim 4 in which the cross-linking agent is a mixture of alkyl ethers of mono-, di-and tri-methylol phenols.

7. The method of claim 1 in which the cross-linking agent is a liquid epoxy resin which is the condensation reaction product of epichlorohydrin and bisphenol-A.

8. The method of claims 2 and 5 in which the polyvinyl acetal is polyvinyl formal and the solvent is a mixture of diacetone alcohol, cyclohexanone and N-methyl pyrrolidone.

9. The method of claims 2 and 5 in which the polyvinyl acetal is polyvinyl butyral and the solvent is a mixture of 1-butanol and alkyl or aryl monoethers of ethylene and higher polyglycols.

10. The method of claim 1 in which the liquid composition is applied by spin coating.